Europäisches Patentamt

European Patent Office

Office européen des brevets

(19)

(11) **EP 1 393 489 B1**

(12) **EUROPEAN PATENT SPECIFICATION**

(45) Date of publication and mention
of the grant of the patent:
**16.03.2005 Bulletin 2005/11**

(51) Int Cl.$^7$: **H04L 1/18**

(86) International application number:
**PCT/EP2002/005631**

(21) Application number: **02750968.6**

(22) Date of filing: **23.05.2002**

(87) International publication number:
**WO 2002/100029 (12.12.2002 Gazette 2002/50)**

(54) **METHOD AND RECEIVER FOR IMPROVED DATA PACKET TRANSFER IN A TRANSMISSION PROTOCOL WITH REPEAT REQUESTS**

**VERFAHREN UND EMPFÄNGER ZUR VERBESSERTEN DATENPAKETÜBERTRAGUNG IN EIN ÜBERTRAGUNGSPROTOKOLL MIT WIEDERHOLUNGSAUFFORDERUNG**

**PROCEDE ET RECEPTEUR POUR TRANSFERT AMELIORE DE PAQUETS DE DONNEES DANS UN PROTOCOLE DE TRANSMISSION A DEMANDES DE REPETITION**

(84) Designated Contracting States:
**AT BE CH CY DE DK ES FI FR GB GR IE IT LI LU MC NL PT SE TR**

(30) Priority: **01.06.2001 EP 01113345**

(43) Date of publication of application:
**03.03.2004 Bulletin 2004/10**

(73) Proprietor: **Telefonaktiebolaget LM Ericsson (publ)**
**164 83 Stockholm (SE)**

(72) Inventors:
• **MEYER, Michael**
**52080 Aachen (DE)**
• **PEISA, Janne**
**FI-02130 Espoo (FI)**
• **RATHONYI, Bela**
**S-217 42 Malmö (SE)**

• **SACHS, Joachim**
**52074 Aachen (DE)**
• **WAGER, Stefan**
**02770 Espoo (FI)**

(74) Representative: **Mohsler, Gabriele**
**Ericsson Eurolab Deutschland GmbH,**
**Research Department,**
**Ericsson Allee 1**
**52134 Herzogenrath (DE)**

(56) References cited:
**US-A- 5 774 479** **US-A- 5 872 777**

• **3GPP TS 25.322 VERSION 4.0.0 RELEASE 4: "Universal Mobile Telecommunications System (UMTS); RLC protocol specification" ETSI TS 125 322 V4.0.0, March 2001 (2001-03), pages 1-57, XP002180710 Sophia Antipolis,FR cited in the application**

## Description

Technical field of the invention

The present invention relates to a method according to the preamble of claim 1. A receiver and software programs embodying the invention are also described.

Background of the invention

Different modes can be used for the transmission of data packets from a transmitter to a receiver, e. g. a transparent mode, an unacknowledged mode or an acknowledged mode. By using an ARQ (Automatic Repeat Request) mechanism, the acknowledged mode provides the possibility to retransmit data packets which are defective, either because they are lost or because they have been received in error. In this way, a loss free data transmission can be ensured for higher layers in a protocol stack although individual data packets of the ARQ layer are defective, e.g. due to a disturbed radio link. To allow an ARQ mechanism it is customary to identify the data packets by a sequence number which is generally attributed to the packets on a modulo basis. Messages from the receiver to the transmitter indicate which packets are defective and retransmissions of said packets are performed according to the messages. In addition, the messages can also acknowledge correctly received data packets.

The status of transmitted and received data packets can be controlled using receiver and transmission windows in the receiver and the transmitter, respectively, i.e. memories which store whether a data packet is acknowledged or not. The receiver window according to the definition used throughout this text ranges from the first unacknowledged packet to the packet with the highest received sequence number, generally under consideration of a modulo sequence numbering. In another customary definition which is used e.g. in 3GPP (3rd Generation Partnership Project) specifications, the term "receiver window" comprises also a range of sequence numbers above the highest received sequence number. This range is not included in the present definition.

An example of a transmission protocol which has an acknowledged mode is the RLC (radio link control) protocol as described in the 3GPP technical specification 3G TS 25.322 V4.0.0 (2001-03) of the 3rd Generation Partnership Project, Technical Specification Group Radio Access Network. The RLC protocol is used for the transmission of data in a WCDMA (Wideband Code Division Multiple Access) system, for example in the Universal Mobile Telecommunication System (UMTS).

In a communication system, the transmitter is for example a user equipment like a mobile phone or a network node like an RNC (Radio Network Controller).

The RLC protocol layer in the transmitter receives packets, e.g. from a higher layer in the protocol stack. The packets from the higher layer are denoted as SDUs (Service Data Units). The RLC layer transforms the SDUs to data packets denoted as packet data units (PDU) to prepare them for transmission over a link between the transmitter and the receiver. In the RLC layer of the transmitter, packet transformations comprise for example a segmentation, concatenation or buffering of SDUs while PDUs can for example be padded or buffered. The receiver is usually a network node or a user equipment communicating with the transmitter. The RLC layer of the receiver performs an inverse processing to release the data either to a higher protocol layer or to forward it to a link layer for transmission through further domains of the communication system, for example through a core network of the communication system.

In the RLC protocol, the messages indicating defective data packets are denoted as status reports and may consist of one or several protocol data units. The RLC specification requires that a status report shall include information about all protocol data units that have been received and all units detected as defective. Accordingly the receiver is reporting at the time when a status report is generated about all protocol data units which are currently in the receiver window. To improve the protocol performance in terms of delay and throughput optimization it is necessary that retransmissions of erroneously received radio link control protocol data units are sent as soon as possible. However, fast retransmissions may result in several retransmissions of the same PDU which is a waste of resources. Several status reports within one radio link control (RLC) round trip time trigger each the retransmission of a particular defective protocol data unit because all negatively acknowledged protocol data units are retransmitted when the transmitter receives a status report. Especially if status reports are sent as often as possible this may speed up the protocol but triggers unnecessary retransmissions.

The RLC protocol allows to control the amount of status reports by a Status Prohibit Timer. This timer prohibits the sending of status reports for a certain amount of time. If the Status Prohibit Timer is set higher than the RLC round trip time, unnecessary retransmissions are prevented. The disadvantage is that this slows down the retransmission of erroneous data packets significantly and results in a slow protocol, especially for a high proportion of defective packets and high round trip times. An alternative to avoid unnecessary retransmissions is the estimated PDU counter (EPC) as described in 3GPP specification 3G TS 25.322. The EPC mechanism comprises both a timer to consider the round trip time and in addition a counter corresponding to the number of packets requested for retransmission. The counter eliminates the influence of the link capacity on the transmission time but the EPC mechanism also does not solve the problem that the protocol is slowed down by the timer.

As a result, current protocols comprising a retransmission of data packets provide basically two options which either waste resources or slow down the protocol. Neither option provides an optimal performance.

Besides these problems, the existing technology can also disadvantageously affect the transport layer above the ARQ layer, in particular TCP (Transmission Control Protocol). TCP is a higher layer protocol which is widely used to provide a reliable data transfer in communication networks, for example in the Internet. Interactive transport protocols like TCP control transmissions according to reply messages from the receiving to the transmitting entity. Control procedures can adapt the transmitted data rate according to the replies, e.g. if a time-out for a reply indicates a packet loss. A radio link control protocol which is contributing to a large transport layer round trip time is therefore not only disadvantageous in itself. The high delay can furthermore trigger control procedures of the transport layer, even if a time-out results from a radio link round trip time and not from a packet loss in the network. As a result the existing RLC protocol is often too slow to support high TCP throughputs although the underlying physical layer would allow a corresponding data rate.

Finally, a large round trip time can cause a stalling condition of the transmission window in case of a limited window size, e.g. if a modulo sequence numbering is used. In a stalled window all positions are attributed to data packets. The window can not be shifted and new data packets accordingly not be sent until the oldest defective data packet is acknowledged. This blocks the data transmission.

Patent US 5,442,637 describes a modification of the transmission control protocol (TCP), which performs the control processing for a TCP connection only periodically in order to reduce the processing associated with the reception of data packets. For this purpose, an acknowledgement timer, which is reset according to an acknowledgement, and a packet counter delay the sending of acknowledgements so that acknowledgment processing is performed only periodically. However, the above problems can not be solved in this way.

Summary and description of the invention

It is an object of the present invention to obviate the above disadvantages and provide a method and a receiver for an improved transmission of data packets in a communication system. It is especially an object to avoid unnecessary multiple transmissions and ensure a low transmission delay.

According to the invention, the method described in claim 1 is performed. Furthermore, the invention is embodied in a receiver and a program unit as described in claims 16 and 19. Advantageous embodiments are described in the further claims.

In the proposed method for the transmission of data packets from a transmitter to a receiver, defective data packets are detected in the receiver and a first status message with an indication of defective data packets is sent from the receiver to the transmitter. A defective data packet can be a data packet in which an error is detected, e.g. by checking control information in the data packet like a check sum, or which is detected as missing, e.g. when the corresponding sequence number is not received. A retransmission of data packets indicated as defective is performed by the transmitter according to the first status message.

A basic idea of the invention is that the receiver does not report about all defective data packets each time it sends a status message. For this purpose the receiver initializes a timing unit according to the time when the first status message is sent and a threshold corresponds to said status message. For example, a first timer or a counter can be started when the status message is forwarded for transmission to an underlying layer in the protocol stack or when the transmission is started by a physical layer. The timing unit preferably reaches the threshold after one round trip time, which can for example be represented by a pre-configured constant value of a counter or timer or by a measured round trip time between the transmitter and the receiver. A setting of the threshold corresponding to a slightly higher value than one round trip time can allow for variations and increases the stability of the proposed method.

After the timing unit is started the receiver determines that a further status message indicating defective data packets is required. For example, the receiver will generally receive further data packets which are also checked for defects and the further status message can be triggered when a predefined number of further defective data packets is detected. The receiver can also determine independently of data packets detected as defective that a further status message is required, e.g. when a request for a status message is received from the transmitter or when the timing unit or another timer reaches a defined threshold.

Data packets identified as defective are selected for indication in the further status message. Indications of the defective data packets are not included in the further status message if a check indicates that the defective data packet is indicated in a preceding status message, especially in the first status message, and if the timing unit has not reached the corresponding threshold, e.g. if a timer is not expired. It is possible that the threshold is determined during these checks while determining it already at the sending of the data packet is not required for all embodiments of the method. In another option, the further status message is triggered when the timing unit reaches the threshold or a defined fraction of it. In this case, the check whether a data packet is indicated in the first status message can be simplified to the selection of defective data packets from one or several specified parts of a receiver window.

In case of a negative result for one condition, the respective other condition for the selection of a defective data packet needs not to be checked. For example after the threshold is reached a packet can be included in the further status message without a check whether it is indicated in the corresponding status message. According to the sending of the further status message a further threshold can be defined, e.g. as a preconfigured constant or a measured value as described above. The further threshold is evaluated in the same way as the first threshold for still further status messages in comparison to the same or a further timing unit.

The further status message can be sent before the threshold is reached to speed up retransmissions. A further request for the retransmission of already requested data packets is delayed according to the threshold which represents the expected arrival of the already requested retransmissions at the receiver. Still further status reports can be sent before the first and further thresholds are reached but in any status report only those defective data packets are indicated which were either not indicated in any former status message or for which the corresponding threshold is reached or passed.

The invention can for example be implemented in a user equipment in order to speed up downlink traffic to the user. It is also advantageous to implement the invention in a network node adapted to set up connections with user equipment, e.g. in a radio network controller RNC or in a radio base station depending on the node in which the protocol controlling transmissions over the link is terminated. Preferably the proposed method is implemented at both ends of the link because generally both sides can be the receiver. It is however also possible to implement the method only in one receiver, especially on the side of the link to which most data traffic is sent which is typically the downlink side. It is especially advantageous that adaptations of the transmitter are not required.

The invention speeds up the radio link control protocol by allowing an early retransmission of defective packets while avoiding retransmissions which are not necessary. An early retransmission has the advantage that the data traffic is less bursty, i.e. the variations in the intervals between data delivery to higher layers are reduced, especially in case of an in-order delivery of data packets by the proposed protocol to the higher layer. The processing requirements for all devices in a connection can be decreased in this way. The proposed method is especially beneficial for TCP traffic and reduces the probability of a stalling transmission window significantly.

In a preferred embodiment of the invention, the timing unit is a timer and the threshold is the expiry of the timer. It is possible to use a different timer for every status message and set the expiry value to the round trip time. It is also an option to use a single timer for all status messages and set the expiry threshold to the timer value at the sending of the status message plus the expected round trip time. The use of timers allows a very precise implementation of the proposed method.

To limit the number of timers required for the method, an advantageous timer comprises a threshold timer with a threshold set to an expiry value. In addition, the timing unit comprises an interval timer. The threshold timer and the interval timer are started according to the sending of the first status message. When a subsequent status message is sent, the value of the interval timer is stored and the interval timer is reset and restarted. The threshold timer is reset and restarted when it reaches the expiry threshold and the expiry threshold is set to the stored value of the interval timer. The procedure can be repeated for any subsequent status message. In this way, any number of status messages can be tracked with a single timing unit.

In an alternative embodiment, the timing unit comprises a packet counter for received packets and the threshold is a counter value. In an option, the counter is not evaluated directly in the selection of data packets but the reaching of the threshold or a defined fraction of the threshold by the timing unit triggers the further status message. The selection of the requested data packets for the further status message can in this case be all defective packets from one or more intervals defined with respect to the present value of a transmission variable, especially the sequence number of the upper border of a receiver window, and the threshold value. This allows a very simple implementation of the invention and is suitable especially for constant data rates while a varying date rate can cause erroneous estimates of the round trip time. For a small number or magnitude of erroneous estimates, the total amount of unnecessary retransmissions is still significantly reduced.

Still further status messages can be sent and a corresponding number of still further thresholds can be determined, i.e. a threshold can also be determined for the second status message and at least one third status message can be sent. An indication of a defective data packet is only included in any further status message if said packet is not included in any preceding first or further status message or if the corresponding threshold is reached. In this way, multiple status messages can be sent during a round trip time without or with significantly reduced risk of unnecessary retransmissions.

The receiver can determine that a status message is required by using any single condition described in the following or any combination of such conditions. For example, the receiver can determine that a status message is required when it receives a polling request from the transmitter. A status message can also be triggered after a predefined number of data packets is received or after each data packet being detected as defective or after a predefined number of defective data packets. Status messages can also be sent in regular intervals, e.g. measured in milliseconds or transmission time intervals (TTI), or after the threshold or defined fraction of the threshold is reached by the timing unit, i.e. after expiry of a status timer or a counter. The latter option is especially advantageous because it simplifies the selection of defective data packets for further status messages. It is also possible to use a combination of a timer and a packet counter as in the EPC method. To avoid that packets of a higher layer in the protocol stack are blocked by single missing packets from the ARQ layer a status message can be sent at the end or beginning of packets from a higher layer of the protocol stack. Still further conditions can be the size of the status message content, i.e. that the content fits into one or a predefined number of data packets or that a status message indicates a certain number of data packets. A further advantageous triggering condition is the reception of a predetermined fraction of a receiver window. The selected condition or combination can be used to optimize the speed of retransmissions, the overhead necessary for the status messages, the burstyness of the traffic, the required memory and processing capacity in the devices or to attain an advantageous compromise of parameters.

The time between two subsequent status messages, e.g. between the first status message and the further status message, is preferably lower than a round trip time between the transmitter and the receiver. With increasing number of status messages per round trip time, the overall transmission delay of the protocol by defective data packets is reduced.

In many transmission systems data can be transmitted over channels with different properties. Especially, transmissions of a user in a communication system are performed either over a channel dedicated to the user or over a shared channel. On a dedicated channel the user has generally a defined bandwidth and delay for transmissions. These parameters can be different for another dedicated channel and they may vary for a shared channel, e.g. according to the behavior of other users in the communication system. It is advantageous that the first threshold or any further threshold is determined according to the properties of the channel used for data transfer. In this way the retransmissions can be performed faster on a channel with low delay. A threshold independent of the channel properties is more simple to configure but can introduce unnecessary delays.

To identify the data packets which are indicated in the status messages the receiver preferably has a memory to store a corresponding information. For example, the receiver can store at least one boundary of an interval of sequence numbers, the interval comprising packets in a first or further status message. The memory can alternatively store a status message number or a timing unit number or threshold number for each retransmitted data packet. It is also possible to attribute a timer permanently to a specific range of sequence numbers (e.g. timer n may be attributed to the sequence numbers [n*256, n*256+255] with n = 0, 1, 2, ...). The latter alternative is especially suitable if all ranges of sequence numbers have the same size. It is less flexible but easy to configure and does not require a memory for storing which data packets are indicated in a specific status message.

The threshold preferably corresponds to approximately one round trip time to avoid unnecessary retransmissions without slowing down the protocol. If the round trip time can vary, a value higher than the average round trip time reduces the probability of unnecessary retransmissions while increasing the delay. The most preferable option is therefore to set the threshold, e.g. the timer expiry, to a value corresponding to a slightly higher time than one round trip time to allow for variations and ensure a high stability of the proposed method, i.e. to adapt the threshold by a correction value for the round trip time. A suitable magnitude of the correction value can depend on different parameters like the proportion of retransmissions. Optionally, the timing unit comprises both a timer to consider the round trip time and a packet counter to determine the correction value.

To reduce the number of data packets which are in the transmission window of the transmitter, an advantageous status message comprises indications of all correctly received data packets, e.g. since the last status message or in the receiver window. Because these packets are not requested for retransmission, there is no risk of multiple transmissions while an early acknowledgment to the transmitter allows a shifting of the transmission window to avoid a stalling.

The proposed method is especially advantageous for implementation in an RLC layer of the receiver, i.e. if the packets are RLC packet data units.

It is also advantageous to use the proposed method for the data packets of a physical layer in a protocol stack. This is especially beneficial for the HSDPA (High speed downlink packet access) evolution of WCDMA which uses an ARQ mechanism on the physical layer of the protocol stack. In HSDPA a hybrid ARQ mechanism can be applied in which erroneous data packets are not discarded but information from different transmissions of the same packet can be combined to reconstruct the packet. Especially in this case, it is often advantageous if the original and the retransmitted data packet are not identical but they may for example be coded in a different way to improve the probability of correct decoding after combining the original transmission and the retransmission. The method can be used both for downlink and uplink traffic. On the network side of the wireless link, the protocol is preferably implemented in a radio base station to speed up the traffic. If the method is used on the physical layer this can either be an alternative to the application on a higher layer, e.g. RLC, or as a backup solution in which the method is used both on the physical layer and a higher layer.

A receiver for a communication system for the transmission of data packets according to an ARQ mechanism comprises a unit for the detection of defective data packets and a communication unit to initiate status messages with an indication of defective data packets to a transmitter in the communication system. According to the invention, the receiver is provided with a timing unit and adapted to initializes the timing unit according to the initiation of a first status message. For example, the receiver can be adapted to start a first timer according to the initiation of a first status message. A control unit determines that a further status message indicating defective data packets is required, e.g. according to one of the conditions described with respect to the proposed method.

The receiver is furthermore provided with a unit adapted to perform a check whether a defective data packet is included in any preceding status message, especially in the first status message, and whether the corresponding timing unit has reached a threshold, e.g. whether the first timer is expired. The receiver includes the indication of a defective data packet in the further status message if the data packet is not indicated in a preceding status message or if the corresponding timing unit has reached the threshold, e.g. the corresponding timer is expired. The communication unit initiates the further status message comprising indications of the selected data packets. The receiver preferably initializes a further timing unit and/or determines a further threshold according to the initiation of the further status message, e.g. starts a further timer according to the initiation of the further status message. The above units can for example be implemented as software which is executed in a processing system of the receiver. The receiver is preferably adapted to perform one or several of the embodiments of the method described.

The receiver is for example a radio base station, a user equipment or a radio network controller. The same entities can also be a transmitter in the proposed method.

A program unit according to the invention can for example be stored on a data carrier or loadable into a receiver in a communication system, e.g. as a sequence of signals. The program unit can comprise code for performing any of the methods described.

The foregoing and other objects, features and advantages of the present invention will become more apparent in the following detailed description of preferred embodiments as illustrated in the accompanying drawings.

Brief description of the drawings

Fig. 1    shows a radio link in a wireless communication system in two different representations

Fig. 2    shows an example of transmitted RLC packets during an interval of time

Fig. 3    shows the handling of data packets according to the invention

Fig. 4    shows a receiver according to the invention

Detailed description of preferred embodiments of the invention

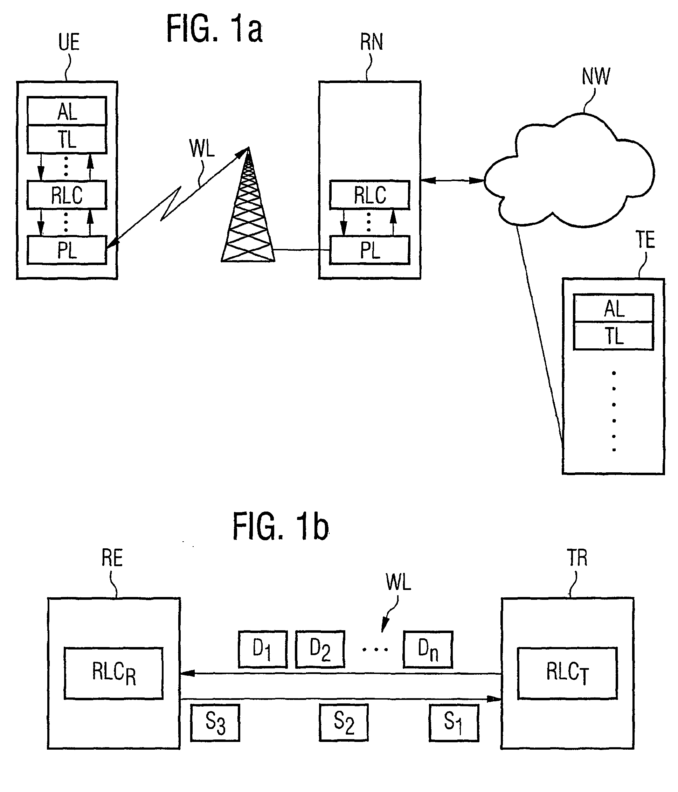

Figure 1a illustrates a transmission system comprising a wireless link WL. The link WL connects a user equipment UE, for example a mobile phone or another terminal, and a radio network node RN, for example an RNC or a base station. Further equipment necessary for the connection is omitted for clarity, e.g. in case that the node RN is an RNC the wireless link extends between the user equipment UE and a radio base station which is in turn connected to the RNC. Both the user equipment UE and the node RN can be the transmitter or the receiver of the present invention, depending on the direction in which data packets are sent over the wireless link WL.

User equipment UE and network node RN comprise processing systems in which at least parts of a protocol stack for the transmission of data is implemented. The processing stack in the example comprises an application layer AL for executing applications, a transport layer TL, e.g. implementing TCP, a radio link control layer RLC and a physical layer PL. Further layers which are not depicted can also be present in the protocol stack as indicated by dots, e.g. a UMTS system comprises a MAC (Medium Access Control) layer between the RLC and the physical layer PL.

The user equipment UE in the example communicates with an application running in a further terminal equipment TE, for example a server. The application layer AL and the transport layer TL are terminated in the further terminal equipment TE. The data packets between user equipment and terminal equipment are sent via the node RN and one or more intermediate networks NW, e.g. the core network of a communication system. Data packets of the transport layer TL are transferred to the RLC layer for transmission over the wireless link WL. The behavior of the RLC packets on the wireless link, especially the delays introduced by the properties of the RLC layer and all underlying layers, affects the performance of the higher layers TL, AL in the protocol stack.

In figure 1 b a model of the communication over the wireless link WL is shown from the perspective of the RLC layer. The RLC entity $RLC_T$ in the transmitter TR sends data packets $D_1 ... D_n$ to the RLC entity $RLC_R$ in the receiver RE by using underlying layers as described above. The receiving entity $RLC_R$ acknowledges the reception of correctly received data packets and requests the retransmission of defective data packets in a first status message $S_1$ which is sent back to the transmitter. To speed up the protocol retransmissions of a data packet D are preferably performed with priority over those packets which are to be transmitted for the first time.

The RLC round trip time is the period from the sending of the first status message $S_1$, i.e. the forwarding to the underlying layer in the receiver RE, until the reception of the first requested data packet D, i.e. the time when this packet is forwarded from the underlying layer in the receiver RE to the RLC entity $RLC_R$. In more general terms, the RLC round trip time is the period until the RLC entity on one end of a link receives a response from the RLC entity on the other side. The RLC round trip time includes for example propagation delays on the link WL as well as processing delays for the transfer of data between different layers in the protocol stacks or over interfaces between nodes, e.g. between radio base station and RNC. According to the invention, several further status messages $S_2$, $S_3$ ... can be sent within one round trip time while a single retransmission of a requested data packet can be ensured within a round trip time.

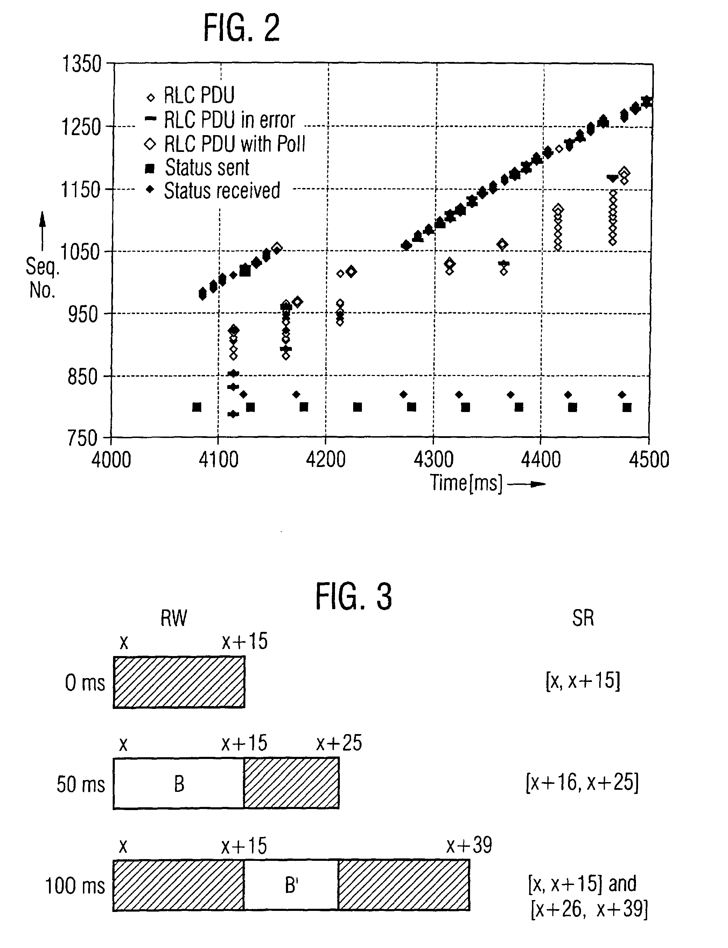

Figure 2 depicts a section of an RLC trace for a receiver, i.e. the reception of packets indicated by their corresponding sequence number over time. Status reports are triggered when a PDU is received in which a poll bit is set. The transmitter can set the poll bit for example when the last PDU from a buffer containing new or retransmitted PDUs is sent. In the example status reports are sent in intervals of 50 ms while the RLC round trip time is about 100ms. On the link WL between transmitter and receiver some of the packets are lost or corrupted as indicated by horizontal bars. The status reports indicate to the transmitter which packets have to be resent.

In a transmission according to the state of the art, e.g. as required by standard 3G TS 25.322, a retransmission is sent for each negative acknowledgement received by the transmitter. The status report includes information about protocol data units that have been received and information about all PDUs detected as defective. If status reports are sent in shorter intervals than the radio link control round trip time as in the example, several status reports include the same protocol data unit.

The receiver in figure 2 sends a status report to the transmitter every 50 ms. Based on those status reports retransmissions are performed. The sequence numbers of the retransmitted packets are lower than the sequence numbers of those packets transmitted for the first time which allows to distinguish both kinds of packets in figure 2. All erroneously received packets are retransmitted twice because each is included in two status reports. For example, the same packets with sequence numbers around 950 are retransmitted both at the time 4165 ms and 4215 ms although the first retransmission of the packets was successful.

As a result there is generally one unnecessary retransmission for all negatively acknowledged protocol data units in figure 2 unless the first retransmission of a PDU is defective. If the interval between status reports is increased to avoid unnecessary retransmissions, this increases the total transmission delay. Furthermore, especially in the case of in-order delivery of data packets to higher layers, the traffic tends to be forwarded in bursts if few defective PDUs inhibit the forwarding of the data and several SDUs are released in a row when a PDU is received correctly after one or several unsuccessful retransmissions.

A method according to the invention is described with respect to figure 3. The horizontal bars in the left part of figure 3 represent the receiver window RW at different times. The blank parts B, B' of the receiver window RW are protected by a corresponding timer, i.e. for these parts B, B' of the receiver window a status report has been sent and the corresponding timer is not expired. The hatched parts are not protected, i.e. they can be included in the next status report SR. The right part of figure 3 depicts the contents of the status reports SR. The following steps start with a first status report during a data transmission. Before the first step, the receiver has already received PDUs with sequence numbers in the interval [x, x + 15] which are not acknowledged so far and upon which the receiver reports in the first status report.

1. The receiver checks whether the PDUs are received without error and sends a first status report according to the check. Preferably, the check is performed immediately after the reception of each data packet and the result is stored for the status report. In the example, the first status report SR comprises the status of the protocol data units in the first interval [x, x+15].

2. The receiver stores the sequence numbers of the first interval, i.e. the identities of the protocol data units which are indicated in the first status report. The receiver is preferably provided with a memory to store such intervals, e.g. the values of both interval boundaries, of one boundary and the interval size or only of one boundary if the size of an interval is constant. It is also possible that a status report contains information about an area of sequence numbers which is not contiguous.

In a still further alternative each timer is attributed to a defined section of the receiver window either with respect to a boundary of the window or to absolute sequence numbers. For this alternative a memory for storing the intervals is not required but the flexibility is lower due to predefined sets of PDUs protected by the timers. In the latter case any interval corresponding to a timer preferably contains the same number of PDUs.

3. The receiver starts a first timer for the first interval. The first timer is preferably set to expire after one round trip time between the RLC entities of the transmitter and the receiver, measured from the time when the first status report is sent.

4. The receiver receives further protocol data units.

5. After a predefined condition a second check is performed whether data packets are defective and a corresponding status report is generated and sent. The check is performed only for the unprotected parts of the receiver window. Consequently, the second status report comprises only indications of protocol data units which are not protected by the first timer. In the example of figure 3, the receiver window at 50 ms comprises protocol data units in the range [x,x+25], but the second status report includes only protocol data units in the interval [x+16,x+25].

6. The receiver stores the sequence numbers of the second interval it reported upon.

7. The receiver starts a second timer for the second interval.

8. The receiver receives retransmissions requested by the status report from step 1.

9. The first timer expires. If a memory stores the corresponding interval, the interval can be removed from the memory or can be marked as unprotected.

10. The receiver receives additional protocol data units.

11. After a further predefined condition the next status report is generated and sent according to a corresponding check of defective PDUs. The new status report comprises only information about protocol data units, which are not protected by any of the timers which are not expired yet. In the example of figure 3, the receiver reports about the packets received in step 8 and step 10, i.e. at 100 ms the receiver reports about necessary further retransmissions in the interval [x,x+15] and about newly received protocol data units in the interval [x+26, x+39]. It does not report about [x+16,x+25] because this interval is protected by the second timer and which is still not expired since step 7.

The above procedure is repeated until all data packets are transferred. A skilled person is aware that the timing of the reception of data in steps 4, 8 and 10 depends on the behavior of the transmitter and the properties of the link while the expiry of the timers is determined in the receiver. Consequently, a reception of data packets can take place at any time during the procedure, e.g. step 4 can also occur simultaneously to steps 2 or 3. There is also no mandatory relation between steps 8 and 9 although the timers are preferably set to at least one round trip time. In an advantageous embodiment the first timer expires at the same time as the corresponding retransmissions are received.

For the conditions triggering further status reports in steps 5 and 10 several options exist. In many cases, the transmitter requests a status report, e.g. by setting a poll bit in a PDU. A further option is to send status reports on a regular basis, for example after a predefined number of received protocol data units, in predefined intervals of time, either in measured in milliseconds or number of transmission time intervals TTI. Alternatively or in addition status reports can be sent at the end of a predefined number of packets of a higher layer, i. e. at the end of SDUs which is advantageous as the further processing of an SDU can only be performed after completion. To allow an effective transmission of status reports it is proposed to send a status report when it fits in a defined number of protocol data units. If an estimated PDU counter (EPC) is used the trigger can also be the EPC expiry. Still further alternatives can be a defined number of defective protocol data units or that a defined fraction of the receiver window or a buffer is filled. Combinations or simultaneous use of several conditions is possible. The alternative allowing the fastest retransmission is that a status report is sent as soon as a defective PDU is detected. In case of a high number of packet losses this requires however a large number of timers and status reports.

The number of necessary timers corresponds to the number of status reports which are sent before the expiry of the first timer. Equivalent to a plurality of timers, a single timer can be used when each interval is released from protection at a specified corresponding threshold value of the single timer. In another preferable option for the implementation, the timing unit comprises two timers denoted interval timer and timeout timer in the following. The expiry value of the timeout timer corresponds to the threshold after which a data packet can be requested in a status message for a second time.

When a first status message is sent, both timers are started with an indication that the timeout timer corresponds to the first status message. If a second status message is sent before the timeout timer is expired, the present value of the interval timer is stored with an indication of the second status message. The interval timer is reset and restarted. For any further status message which is sent before the timeout timer is expired, the present value of the interval timer is again stored with an indication of the corresponding status message and the interval timer is again reset and restarted.

When the threshold value is reached by the timeout timer, this indicates that the data packets indicated in the first status message can be requested again in a further status message if they are still defective. The timeout timer is attributed to the second status message and restarted with the threshold set to the value of the interval timer stored for the second status message, i. e. the timeout timer is set to expire after the stored interval timer value. When the threshold is reached, the same procedure is repeated for any further status message for which a value of the interval timer is stored. If the interval timer reaches the threshold of the timeout timer this indicates that any defective data packet can be requested in a status message. This implementation of the timing unit limits the number of timers required for the tracking of the status messages while ensuring a precise timing.

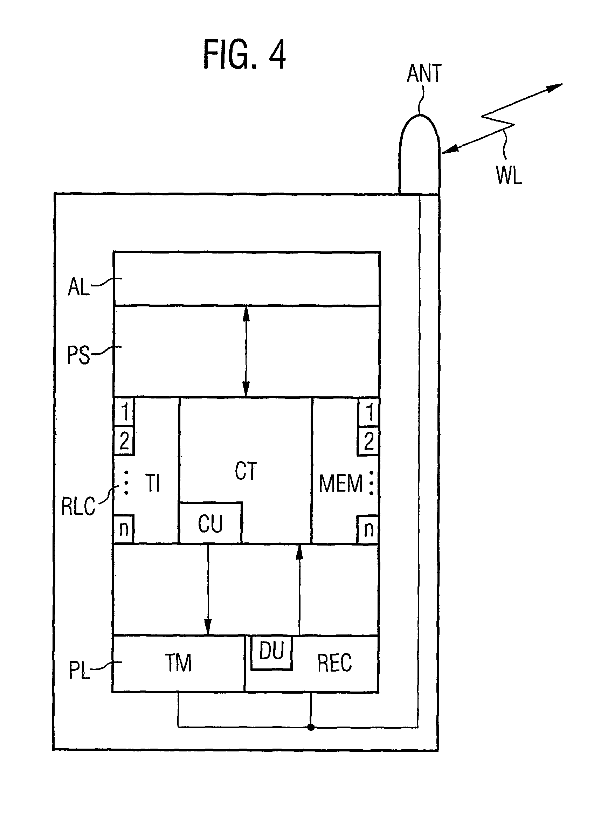

A receiver according to the invention is depicted in figure 4. Especially if the receiver is a user equipment it comprises hardware components like a display, a keyboard, a microphone and a loudspeaker which are all omitted for clarity. The receiver has a processing system PS implementing the protocol stack of the communication device and controlling the mentioned hardware components. The stack includes beside other layers a physical layer PL, an RLC layer and an application layer AL. Wireless signals are received or emitted via an antenna ANT and the signals are decoded and encoded for the wireless link WL in a transmission unit TM and a reception unit REC, respectively. A detection unit DU detects defective data packets, e.g. by controlling checking bits included in the packets of the physical layer. The detection unit can for example discard defective packets.

The processing system further comprises a group of timers $TI_1 ... TI_n$ and a memory MEM with sections 1, ... n corresponding to the timers TI and identifying the data packets in the receiver window which are protected by a specific timer $TI_i$. A control unit CT is adapted to perform the steps of the method as described above. Especially, the control unit CT determines whether a status message S is required. In this case, identifications of the defective packets are included in the status message unless the memory MEM indicates that the data packet was included in a previous status message and the corresponding timer $TI_i$ is not expired. The status message is then initiated by a communication unit CU in the RLC layer and sent by the transmission unit TM in the physical layer via the antenna ANT to the transmitter on the far end of the wireless link WL. It is possible to implement the above units either as hardware or as software executed in the processing system PS of a device or as combination of hard- and software.

If the proposed method is implemented with packet counters instead of timers there a different advantageous options. In a first option, status messages are sent in periodic intervals of time SI corresponding to a number of f = RTT / SI status messages per round trip time RTT. Because of the regular status intervals, a check whether the timing unit has reached a particular threshold needs not to be performed if the data packets for further status messages are suitably selected. For this purpose, a counter stores the number $x_n$ of received PDUs between the preceding status message $S_{n-1}$ and $S_n$ for every status message $S_n$.

With VR(H) being the highest received sequence number, the status message $S_n$ includes the defective data packets in the intervals [VR(H) - $x_n$; VR(H)] and [VR(R); VR(H) - $\sum_{i=0}^{f-1} x_{n-i}$]. VR(R) is the first unacknowledged data packet in the receiver window, i.e. the lower boundary of the receiver window. When a status message is requested by the transmitter, e.g. by setting a poll bit in a PDU, a status message is only sent for defective packets in the interval [VR(R); VR(H) - $\sum_{i=0}^{f-1} x_{n-i} + x'_n$] with $x'_n$ being the retransmitted PDU with the highest sequence number which was received since the last status message. The status request is stored and the remaining data packets for which the status was requested are included into the status message when the corresponding threshold is reached.

In a second option, a status message is sent by the receiver every $x_0$ PDUs, i.e. the timing unit is a packet counter determining the sending of the status messages. The time between two status messages is ST = $x_0$ / r, with r being the transmission rate of PDUs. r can for example be estimated, measured or read from configured parameters. A number of f' = RTT / ST status messages is sent per round trip time RTT. If regular status intervals are assumed, a check whether the timing unit has reached a particular threshold needs not to be performed for a suitable selection of the data packets in further status messages. According to the invention, the status message in this case comprises the intervals [VR (H) - $x_0$; VR(H)] and [VR(R); VR(H) - f' $x_0$]. As in the first option, unnecessary retransmissions of packets with sequence numbers near VR(R) are not excluded. This is, however, often advantageous as delays of these packets are most critical. Alternatively, unnecessary retransmissions can easily be avoided by selecting those intervals [VR(H) - $x_0$; VR(H)], [VR(H) - (f' + 1 )$x_0$; VR(H) - f'$x_0$], [VR(H) - (2f' + 1 )$x_0$; VR(H) - 2f'$x_0$] ... for which the upper boundary is larger than VR(R).

This embodiment is simple to implement but the efficiency depends on the assumption that the value of the packet counter corresponds to the elapsed time. Preferably, the value of f' is therefore adapted as soon as changes in the transmission rate are identified to avoid unnecessary retransmissions or delayed status reports. To avoid a stalling of the algorithm, e.g. at the end of a transmission, it is possible to send always a complete status report for the receiver window upon a corresponding request of the transmitter or to send a complete status when no packets are received for a period of time which can for example be fixed or a function of f'. In either option with a packet counter as timing unit, interval boundaries can be adapted by a correction value in order to allow, e.g., for delays caused by retransmissions or provide a safety margin.

The above embodiments admirably achieve the objects of the invention. However, it will be appreciated that departures can be made by those skilled in the art without departing from the scope of the invention which is limited only by the claims.

**Claims**

1. Method for indicating defective data packets (D) from a receiver (RE) to a transmitter (TR) wherein defective data packets (D) are detected and a first status message ($S_1$) comprising an indication of defective data packets is sent from the receiver (RE) to the transmitter (TR) and a retransmission of defective data packets is performed according to the first status message ($S_1$), wherein

the receiver (RE) initializes a timing unit according to the sending of the first status message ($S_1$), the receiver (RE) determines that a further status message ($S_2$) indicating defective data packets is required, and the receiver sends the further status message ($S_2$), **characterized in that** defective data packets are selected for the further status message ($S_2$),
wherein defective data packets are not selected if they are indicated in the first status message ($S_1$) and for which the timing unit has not reached a threshold, and indications of the selected data packets are included in the further status message ($S_2$).

2. Method according to claim 1, wherein the timing unit is a timer ($TI_1$, $T1_2$) and the threshold is the expiry of the timer ($TI_1$, $TI_2$).

3. Method according to claim 2, wherein the timer ($TI_1$, $T1_2$) comprises a threshold timer with the threshold and an interval timer, wherein the threshold timer and the interval timer are started according to the sending of the first status message ($S_1$), wherein the value of the interval timer is stored when a subsequent status message ($S$) is sent and the interval timer is reset and restarted and wherein the threshold timer is reset and restarted when it reaches the threshold and the threshold is set to the stored value of the interval timer.

4. Method according to claim 1, wherein the timing unit is a packet counter and wherein the threshold is a counter value.

5. Method according to any preceding claim, wherein a further threshold corresponds to the further status message ($S_2$), the receiver (RE) determines that at least one third status message ($S_3$) is required and defective data packets (D) are selected for the third status message ($S_3$) and wherein an indication of a defective data packet is not selected for the third status message ($S_3$) if a check indicates that the packet is included in any preceding status message ($S_1$, $S_2$) and the corresponding threshold is not reached.

6. Method according to any preceding claim, wherein a status message ($S$) is triggered by at least one condition from a group comprising
a reception of a polling request,
a predefined number of received data packets (D),
reaching of the threshold or a defined fraction of the threshold by the timing unit,
the end or beginning of a data packet from a higher layer of a protocol stack,
the size of a content of a status message ($S$),
a number of data packets (D) detected as defective, and
the reception of data packets (D) from a predetermined fraction of a receiver window (RW).

7. Method according to any preceding claim, wherein the time between two subsequent status messages ($S$) is lower than a round trip time between the transmitter (TR) and the receiver (RE).

8. Method according to any preceding claim, wherein data can be transmitted over channels with different properties and wherein at least one threshold is determined according to the properties of the channel used for data transfer.

9. Method according to any preceding claim, wherein the receiver (RE) stores an information which data packets are identified in the status messages ($S$).

10. Method according to claim 9, wherein the information identifies at least one boundary of an interval of sequence numbers, the interval comprising packets (D) indicated in one of the status messages ($S$).

11. Method according to any preceding claim, wherein the threshold corresponds to one round trip time.

12. Method according to claim 11, wherein the threshold is adapted by a correction value for the round trip time.

13. Method according to any preceding claim, wherein a status message ($S$) comprises indications of all correctly received data packets.

14. Method according, to any preceding claim, wherein the data packets (D) are radio link control protocol data units.

15. Method according to any of the claims 1 to 13, wherein the data packets (D) are packets of a physical layer (PL) in a protocol stack.

16. Receiver for a communication system for the transmission of data packets (D), the receiver (RE) comprising a unit (DU) for the detection of defective data packets and a communication unit (CU) to initiate status messages (S) with an indication of defective data packets to a transmitter (TR) in the communication system, wherein the receiver (RE) is provided with a timing unit and adapted to initialize the timing unit according to the initiation of a first status message ($S_1$), and the receiver (RE) is provided with a control unit (CT) adapted to determine that a further status message ($S_2$) is required, **characterized in that** the receiver (RE) is provided with a unit to select defective data packets for indication in the further status message ($S_2$) wherein defective data

packets are not selected if the data packets are indicated in the first status message ($S_1$) and for which the timing unit has not reached a threshold, and

the communication unit (CU) initiates the further status message ($S_2$) comprising indications of the selected data packets.

17. Receiver according to claim 16, wherein the receiver is a radio base station, a user equipment (UE) or a radio network controller.

18. Receiver according to claim 16 or 17, wherein the receiver is adapted to perform a method according to any of the claims 1 to 15.

19. Computer Program said program comprising code adapted to perform a method, when run on a computer, for indicating defective data packets (D) from a receiver (RE) to a transmitter (TR), wherein defective data packets (D) are detected and a first status message ($S_1$) comprising an indication of defective data packets is sent from the receiver (RE) to the transmitter (TR) and a retransmission of defective data packets is performed according to the first status message ($S_1$), wherein the receiver (RE) initializes a timing unit according to the sending of the first status message ($S_1$), the receiver (RE) determines that a further status message ($S_2$) indicating defective data packets is required, and the receiver sends the further status message ($S_2$), **characterized in that**

the program is adapted to select defective data packets for the further status message ($S_2$), wherein defective data packets are not selected if they are indicated in the first status message ($S_1$) and for which the timing unit has not reached a threshold, and indications of the selected data packets are included in the further status message ($S_2$).

**Patentansprüche**

1. Verfahren zum Anzeigen fehlerhafter Datenpakete (D) von einem Empfänger (RE) an einen Absender (TR), wobei fehlerhafte Datenpakete (D) erkannt werden und eine erste Statusmeldung ($S_1$) umfassend eine Anzeige fehlerhafter Datenpakete (D) von dem Empfänger (RE) an den Absender (TR) gesendet wird und eine erneute Übertragung fehlerhafter Datenpakete gemäß der ersten Statusmeldung ($S_1$) durchgeführt wird, wobei der Empfänger (RE) eine Zeitmesseinheit gemäß dem Versenden der ersten Statusmeldung ($S_1$) initialisiert, der Empfänger (RE) bestimmt, daß eine weitere Statusmeldung ($S_2$), die fehlerhafte Datenpakete anzeigt, erforderlich ist und der Empfänger die weitere Statusmeldung ($S_2$) sendet,

**dadurch gekennzeichnet, daß**
fehlerhafte Datenpakete für die weitere Statusmeldung ($S_2$) selektiert werden, wobei fehlerhafte Datenpakete nicht selektiert werden, wenn sie in der ersten Statusmeldung ($S_1$) angezeigt sind und für die die Zeitmesseinheit keine Schwelle erreicht hat, und daß Anzeigen der selektierten Datenpakete in die weitere Statusmeldung ($S_2$) aufgenommen werden.

2. Verfahren nach Anspruch 1, wobei die Zeitmesseinheit ein Zeitgeber ist ($TI_1$, TI2) und die Schwelle der Ablauf des Zeitgebers ($TI_1$, TI2) ist.

3. Verfahren nach Anspruch 2, wobei der Zeitgeber ($TI_1$, TI2) einen Schwellenzeitgeber mit der Schwelle und einen Intervallzeitgeber umfaßt, wobei der Schwellenzeitgeber und der Intervallzeitgeber gemäß dem Versenden der ersten Statusmeldung ($S_1$) gestartet werden, wobei der Wert des Intervallzeitgebers gespeichert wird, wenn eine nachfolgende Statusmeldung (S) gesendet wird und der Intervallzeitgeber rückgesetzt und erneut gestartet wird, und wobei der Schwellenzeitgeber rückgesetzt und erneut gestartet wird, wenn er die Schwelle erreicht, und die Schwelle auf den gespeicherten Wert des Intervallzeitgebers gesetzt wird.

4. Verfahren nach Anspruch 1, wobei die Zeitmesseinheit ein Paketzähler ist und wobei die Schwelle ein Zählerwert ist.

5. Verfahren nach einem der vorstehenden Ansprüche, wobei eine weitere Schwelle der weiteren Statusmeldung ($S_2$) entspricht, der Empfänger (RE) bestimmt, daß mindestens eine dritte Statusmeldung ($S_3$) erforderlich ist und fehlerhafte Datenpakete (D) für die dritte Statusmeldung ($S_3$) selektiert werden, und wobei eine Anzeige eines fehlerhaften Datenpakets nicht für die dritte Statusmeldung ($S_3$) selektiert wird, wenn eine Überprüfung angibt, daß das Paket in einer vorangegangenen Status meldung ($S_1$, $S_2$) enthalten ist und die entsprechende Schwelle nicht erreicht ist.

6. Verfahren nach einem der vorstehenden Ansprüche, wobei eine Statusmeldung (S) ausgelöst wird von mindestens einer Bedingung aus einer Gruppe umfassend
einen Empfang einer Sendeanforderung,
eine vordefinierte Anzahl von empfangenen Datenpaketen (D),
das Erreichen der Schwelle oder eines definierten Bruchteils der Schwelle von der Zeitmesseinheit,
das Ende oder den Anfang eines Datenpakets aus einer höheren Schicht eines Protokollstapels,
die Größe eines Inhalts einer Statusmeldung (S),
eine Anzahl von Datenpaketen (D), die als fehlerhaft erkannt sind, und

den Empfang von Datenpaketen (D) aus einem vorbestimmten Bruchteil eines Empfängerfensters (RW).

7. Verfahren nach einem der vorstehenden Ansprüche, wobei die Zeit zwischen zwei nachfolgenden Statusmeldungen (S) niedriger ist als eine Umlaufzeit zwischen dem Absender (TR) und dem Empfänger (RE).

8. Verfahren nach einem der vorstehenden Ansprüche, wobei Daten über Kanäle mit unterschiedlichen Eigenschaften übertragen werden können, und wobei mindestens eine Schwelle gemäß der Eigenschaften des für den Datentransfer verwendeten Kanals bestimmt wird.

9. Verfahren nach einem der vorstehenden Ansprüche, wobei der Empfänger (RE) eine Information dahingehend speichert, welche Datenpakete in den Statusmeldungen identifiziert sind.

10. Verfahren nach Anspruch 9, wobei die Information mindestens eine Bereichsgrenze eines Intervalls von Folgenummern identifiziert, wobei das Intervall Pakete (D) umfaßt, die in einer der Statusmeldungen (S) angezeigt sind.

11. Verfahren nach einem der vorstehenden Ansprüche, wobei die Schwelle einer Umlaufzeit entspricht.

12. Verfahren nach Anspruch 11, wobei die Schwelle durch einen Korrekturwert für die Umlaufzeit angepaßt ist.

13. Verfahren nach einem der vorstehenden Ansprüche, wobei eine Statusmeldung (S) Anzeigen sämtlicher korrekt empfangener Datenpakete umfaßt.

14. Verfahren nach einem der vorstehenden Ansprüche, wobei die Datenpakete (D) Funkübertragungssteuerungsprotokolldateneinheiten sind.

15. Verfahren nach einem der Ansprüche 1 bis 13, wobei die Datenpakete (D) Pakete einer Bitübertragungsschicht (PL) in einem Protokollstapel sind.

16. Empfänger für ein Kommunikationssystem für die Übertragung von Datenpaketen (D), wobei der Empfänger (RE) eine Einheit (DU) zum Erkennen fehlerhafter Datenpakete und eine Kommunikationseinheit (CU) zum Initiieren von Statusmeldungen (S) mit einer Anzeige fehlerhafter Datenpakete an einen Absender (TR) in dem Kommunikationssystem umfaßt, wobei der Empfänger (RE) eine Zeitmesseinheit enthält und ausgestaltet ist, um die Zeitmesseinheit gemäß der Initiierung einer ersten Statusmeldung (S₁) zu initialisieren, und wobei der Empfänger (RE) eine Steuereinheit (CT) enthält, die ausgestaltet ist zum Bestimmen, daß eine weitere Statusmeldung (S₂) erforderlich ist,
**dadurch gekennzeichnet, daß**
der Empfänger (RE) eine Einheit zum Selektieren fehlerhafter Datenpakete zur Anzeige in der weiteren Statusmeldung (S₂) enthält, wobei fehlerhafte Datenpakete nicht selektiert werden, wenn die Datenpakete in der ersten Statusmeldung (S₁) angezeigt sind und für die die Zeitmesseinheit keine Schwelle erreicht hat, und
die Kommunikationseinheit (CU) die weitere Statusmeldung (S₂) umfassend Anzeigen der selektierten Datenpakete initiiert.

17. Empfänger nach Anspruch 16, wobei der Empfänger eine Funkbasisstation, ein Benutzergerät (UE) oder ein Funknetzsteuergerät ist.

18. Empfänger nach einem der Ansprüche 16 oder 17, wobei der Empfänger ausgestaltet ist, um ein Verfahren nach einem der Ansprüche 1 bis 15 durchzuführen.

19. Computerprogramm, wobei das Programm Code umfaßt, der ausgestaltet ist, um, bei Anwendung auf einem Computer, ein Verfahren zum Anzeigen fehlerhafter Datenpakete (D) von einem Empfänger (RE) an einen Absender (TR) durchzuführen, wobei fehlerhafte Datenpakete (D) erkannt werden und eine erste Statusmeldung (S₁) umfassend eine Anzeige fehlerhafter Datenpakete (D) von dem Empfänger (RE) an den Absender (TR) gesendet wird und eine erneute Übertragung fehlerhafter Datenpakete gemäß der ersten Statusmeldung (S₁) durchgeführt wird, wobei der Empfänger (RE) eine Zeitmesseinheit gemäß dem Versenden der ersten Statusmeldung (S₁) initialisiert, der Empfänger (RE) bestimmt, daß eine weitere Statusmeldung (S₂), die fehlerhafte Datenpakete anzeigt, erforderlich ist und der Empfänger die weitere Statusmeldung (S₂) versendet,
**dadurch gekennzeichnet, daß**
das Programm ausgestaltet ist, fehlerhafte Datenpakete für die weitere Statusmeldung (S₂) zu selektieren, wobei fehlerhafte Datenpakete nicht selektiert werden, wenn sie in der ersten Statusmeldung (S₁) angezeigt sind und für die die Zeitmesseinheit keine Schwelle erreicht hat, und daß Anzeigen der selektierten Datenpakete in die weitere Statusmeldung (S₂) aufgenommen werden.

**Revendications**

1. Procédé pour indiquer des paquets de données (D) défectueux d'un récepteur (RE) à un émetteur (TR), dans lequel des paquets de données défectueux (D) sont détectés et un premier message de statut ($S_1$) comprenant une indication relative aux paquets de données défectueux est envoyé du récepteur (RE) à l'émetteur (TR) et une retransmission des paquets de données défectueux est effectuée en fonction du premier message de statut ($S_1$), dans lequel le récepteur (RE) initialise une unité de temporisation en fonction de l'envoi du premier message de statut ($S_1$), le récepteur (RE) détermine qu'un message de statut supplémentaire ($S_2$) indiquant les paquets de données défectueux est requis et le récepteur envoie le message de statut supplémentaire ($S_2$), **caractérisé en ce que** des paquets de données défectueux sont sélectionnés pour le message de statut supplémentaire ($S_2$), dans lequel des paquets de données défectueux ne sont pas sélectionnés s'ils sont indiqués dans le premier message de statut (Si) et pour lequel l'unité de temporisation n'a pas atteint un seuil, et des indications relatives aux paquets de données sélectionnés sont incluses dans le message de statut supplémentaire ($S_2$).

2. Procédé selon la revendication 1, dans lequel l'unité de temporisation est un temporisateur (TI1, TI2) et le seuil est l'expiration de la temporisation (TI1, TI2).

3. Procédé selon la revendication 2, dans lequel le temporisateur (TI1, TI2) comprend un temporisateur de seuil avec le seuil et un temporisateur d'intervalle, dans lequel le temporisateur de seuil et le temporisateur d'intervalle sont activés en fonction de l'envoi du premier message de statut ($S_1$), dans lequel la valeur du temporisateur d'intervalle est mémorisée lorsqu'un message de statut suivant (S) est envoyé et le temporisateur d'intervalle est réinitialisé et réactivé et dans lequel le temporisateur de seuil est réinitialisé et réactivé lorsqu'il atteint le seuil et le seuil est fixé à la valeur mémorisée du temporisateur d'intervalle.

4. Procédé selon la revendication 1, dans lequel l'unité de temporisation est un compteur de paquets et dans lequel le seuil est une valeur de compteur.

5. Procédé selon l'une quelconque des revendications précédentes, dans lequel un seuil supplémentaire correspond au message de statut supplémentaire ($S_2$), le récepteur (RE) détermine qu'au moins un troisième message de statut ($S_3$) est requis et des paquets de données défectueux (D) sont sélectionnés pour le troisième message de statut ($S_3$) et dans lequel une indication relative à un paquet de données défectueux n'est pas sélectionnée pour le troisième message de statut ($S_3$) si une vérification indique que le paquet est inclus dans l'un des mes-

sages de statut précédents ($S_1$, $S_2$) et le seuil correspondant n'est pas atteint.

6. Procédé selon l'une quelconque des revendications précédentes, dans lequel un message de statut (S) est déclenché par au moins une condition d'un groupe comprenant une réception d'une requête d'invitation à émettre,
un nombre prédéfini de paquets de données (D) reçus,
l'atteinte du seuil ou d'une fraction définie du seuil par l'unité de temporisation,
la fin ou le début d'un paquet de données à partir d'une couche plus haute d'une pile de protocoles,
la taille d'un contenu d'un message de statut (S),
un nombre de paquets de données (D) détectés comme étant défectueux, et
la réception de paquets de données (D) à partir d'une fraction prédéterminée d'une fenêtre de récepteur(RW).

7. Procédé selon l'une quelconque des revendications précédentes, dans lequel le temps entre deux messages de statut (S) qui se suivent est inférieur à un temps de trajet aller-retour entre l'émetteur (TR) et le récepteur (RE).

8. Procédé selon l'une quelconque des revendications précédentes, dans lequel des données peuvent être transmises sur des canaux ayant des propriétés différentes et dans lequel au moins un seuil est déterminé en fonction des propriétés du canal utilisé pour le transfert des données.

9. Procédé selon l'une quelconque des revendications précédentes, dans lequel le récepteur (RE) mémorise une information relative aux paquets de données qui sont identifiés dans les messages de statut (S).

10. Procédé selon la revendication 9, dans lequel l'information identifie au moins une limite d'un intervalle de numéros de séquence, l'intervalle comprenant des paquets (D) indiqués dans un des messages de statut (S).

11. Procédé selon l'une quelconque des revendications précédentes, dans lequel le seuil correspond à un temps de trajet aller-retour.

12. Procédé selon la revendication 11, dans lequel le seuil est adapté par une valeur de correction du temps de trajet aller-retour.

13. Procédé selon l'une quelconque des revendications précédentes, dans lequel un message de statut (S) comprend des indications relatives à tous les paquets de données correctement reçus.

**14.** Procédé selon l'une quelconque des revendications précédentes, dans lequel les paquets de données (D) sont des unités de données protocolaires de commande de radioliaison.

**15.** Procédé selon l'une des revendications 1 à 13, dans lequel les paquets de données (D) sont des paquets d'une couche physique (PL) dans une pile de protocoles.

**16.** Récepteur pour un système de communication pour la transmission de paquets de données (D), le récepteur (RE) comprenant une unité (DU) pour la détection de paquets de données défectueux et une unité de communication (CU) pour lancer des messages de statut (S) avec une indication relative aux paquets de données défectueux vers un émetteur (TR) dans le système de communication, dans lequel le récepteur (RE) est pourvu d'une unité de temporisation et adapté afin d'initialiser l'unité de temporisation en fonction du lancement d'un premier message de statut ($S_1$) et le récepteur (RE) est pourvu d'une unité de commande (CT) adaptée afin de déterminer qu'un message de statut supplémentaire ($S_2$) est requis, **caractérisé en ce que** le récepteur (RE) est pourvu d'une unité afin de sélectionner des paquets de données défectueux en vue d'une indication dans le message de statut supplémentaire ($S_2$), dans lequel des paquets de données défectueux ne sont pas sélectionnés si les paquets de données sont indiqués dans le premier message de statut ($S_1$) et pour lequel l'unité de temporisation n'a pas atteint un seuil, et l'unité de communication (CU) lance le message de statut supplémentaire ($S_2$) comprenant des indications relatives aux paquets de données sélectionnés.

**17.** Récepteur selon la revendication 16, dans lequel le récepteur est une station de base radio, un équipement d'utilisateur (UE) ou un contrôleur de réseau radio.

**18.** Récepteur selon la revendication 16 ou 17, dans lequel le récepteur est adapté afin de mettre en oeuvre un procédé selon l'une quelconque des revendications 1 à 15.

**19.** Programme informatique, ledit programme comprenant un code adapté pour mettre en oeuvre un procédé, lors d'une implémentation sur un ordinateur, pour indiquer des paquets de données défectueux (D) d'un récepteur (RE) à un émetteur (TR), dans lequel des paquets de données défectueux (D) sont détectés et un premier message de statut ($S_1$) comprenant une indication relative aux paquets de données défectueux est envoyé du récepteur (RE) à l'émetteur (TR) et une retransmission des paquets de données défectueux est effectuée en fonction du premier message de statut ($S_1$), dans lequel le récepteur (RE) initialise une unité de temporisation en fonction de l'envoi du premier message de statut (Si), le récepteur (RE) détermine qu'un message de statut supplémentaire ($S_2$) indiquant des paquets de données défectueux est requis et le récepteur envoie le message de statut supplémentaire ($S_2$), **caractérisé en ce que** le programme est adapté pour sélectionner des paquets de données défectueux pour le message de statut supplémentaire ($S_2$), dans lequel des paquets de données défectueux ne sont pas sélectionnés si ils sont indiqués dans le premier message de statut ($S_1$) et pour lequel l'unité de temporisation n'a pas atteint un seuil, et des indications relatives aux paquets de données sélectionnés sont incluses dans le message de statut supplémentaire ($S_2$).

## FIG. 1a

## FIG. 1b

# FIG. 2

Legend:
- ◇ RLC PDU
- ▬ RLC PDU in error
- ◇ RLC PDU with Poll
- ■ Status sent
- ◆ Status received

Seq. No. (vertical axis): 750, 850, 950, 1050, 1150, 1250, 1350

Time[ms] (horizontal axis): 4000, 4100, 4200, 4300, 4400, 4500

# FIG. 3

|  | RW |  | SR |
|---|---|---|---|
| 0 ms | x ▦ x+15 |  | [x, x+15] |
| 50 ms | x ▢B▢ x+15 ▦ x+25 |  | [x+16, x+25] |
| 100 ms | x ▦ x+15 ▢B'▢ x+39 ▦ |  | [x, x+15] and [x+26, x+39] |

# FIG. 4